Europäisches Patentamt

European Patent Office

Office européen des brevets

(11) Publication number: **0 086 272**
**B1**

(12) **EUROPEAN PATENT SPECIFICATION**

(45) Date of publication of patent specification: **16.04.86**

(51) Int. Cl.⁴: **H 02 K 17/16,** H 02 K 1/06, H 02 K 15/02

(21) Application number: **82111884.1**

(22) Date of filing: **21.12.82**

(54) **Rotor for axial field electromagnetic devices and method of construction therefor.**

(30) Priority: **20.01.82 US 341032**

(43) Date of publication of application:
**24.08.83 Bulletin 83/34**

(45) Publication of the grant of the patent:
**16.04.86 Bulletin 86/16**

(84) Designated Contracting States:
**DE FR GB IT**

(56) References cited:
**EP-A-0 047 816**
**FR-A-1 107 737**
**US-A-1 605 796**

**Patent Abstracts of Japan, vol. 4, no. 67, 20 May 1980, page 26E11**

(73) Proprietor: **ALLIED CORPORATION**
**Columbia Road and Park Avenue P.O. Box 2245R (Law Dept.)**
**Morristown New Jersey 07960 (US)**

(72) Inventor: **Mas, Joseph Augusto**
**35 North Star Drive**
**Morristown New Jersey 07960 (US)**

(74) Representative: **Weber, Dieter, Dr. et al**
**Dr. Dieter Weber und Klaus Seiffert**
**Patentanwälte Gustav-Freytag-Strasse 25**
**Postfach 6145**
**D-6200 Wiesbaden 1 (DE)**

## Description

Field of the invention

This invention relates to rotor for axial field electromagnetic devices such as motors and generators and methods of forming the same and more particularly to axial field rotor apparatus formed of a wound ribbon of magnetic material and method of construction therefor.

Background of the invention

In EP—A—0 047 816, there is disclosed multiple pole, axial field elecctromagnetic devices such as motors and generators in which the rotor and/or stator are formed of cylindrical core elements of annular cross-section having radial slots adpated to receive windings and/or conductors therein.

This reference (EP—A—0 047 816), which falls under Article 54(3) EPC, discloses a method of forming a rotor structure comprised of a strip of magnetic material wound to form a cylindrical structure having first and second circular faces and having a desired diameter and a width between faces corresponding to the width of the magnetic strip material. A plurality of spaced uniform radial slots is cut into a circular face to a selected depth corresponding to a portion of the width between faces whereby the slots are uniformly distributed about the circumference of said face. A spider formed of conductive material and having a hub and an outer circular member joined by spokes, one spoke for each slot is placed into the slotted circular face to complete the formation of a rotor formed of magnetic strip material. Each spider may be formed by a plurality of stampings stacked on top of one another.

EP—A—0 047 816 also discloses a flow-through rotor core comprising a roll of magnetic material forming a cylindrical structure, said roll of magnetic material taking the form of a thin strip of magnetic material having a predetermined width which is wound to produce said cylindrical structure, said cylindrical structure having first and second circular faces and a distance between said first and second circular faces corresponding to said predetermined width;

a plurality of uniform radially disposed slots cut into said first and second circular faces extending entirely through said cylindrical structure between said first and second circular faces; and

spider means having an inner hub, an outer circular member and a plurality of radial spokes extending therebetween disposed in said cylindrical structure and thereabout, said spider means being formed of conductive material and having one radial spoke for each of said plurality of uniform radially disposed slots cut into said first and second faces, said outer circular member having a diameter sized to fit over said cylindrical structure and said plurality of radial spokes being sized to fit within corresponding ones of said plurality of uniform radially disposed slots formed in said circular faces.

As the invention set forth in the European Patent Application envisions the use of certain magnetic materials in strip or ribbon form, and in any event, the rotor structure is generally required to be laminated, it will be appreciated that the formation of flow-through rotors, i.e., those having a separate magnetic return path in an axial or radial field devices can be a costly and time-consuming process especially when the material employed in the formation of the laminated rotor structure is relatively thin.

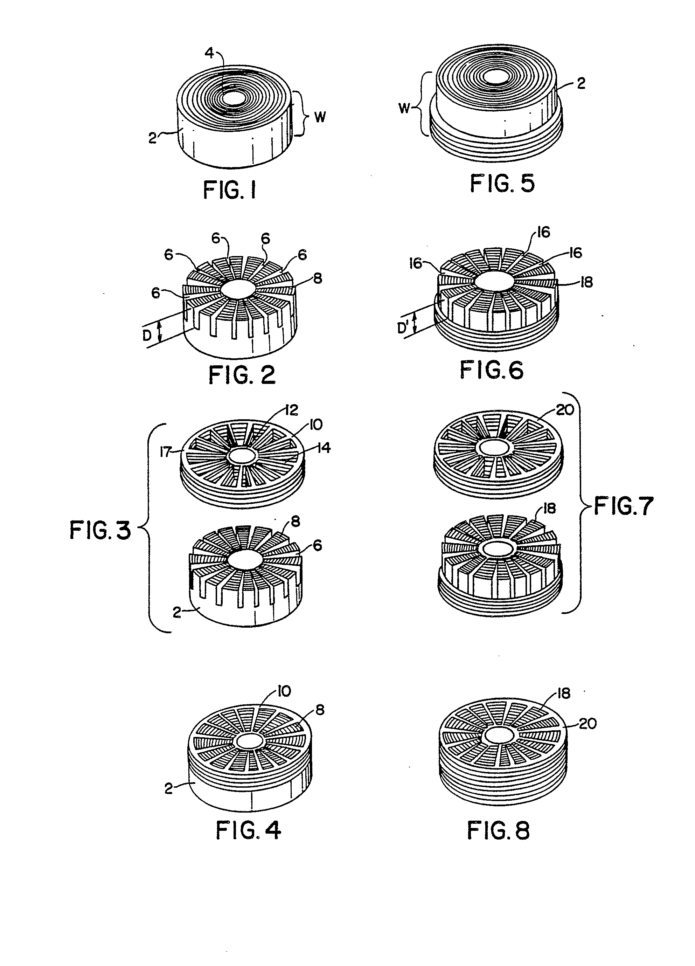

This may be appreciated, for instance, upon a consideration of US —A— 2,550,571 (B. Litman) which is directed to an axial gap motor and illustrates, as shown in Figure 4, rotor structure wherein a rotor spider is employed to support a squirrel cage secondary member forming the pancake-like rotor disclosed therein. Within the conductive squirrel cage is formed the magnetic flux carrying member which is made up of a plurality of discrete, spaced sets of radial stacked tooth punchings 25 which are completely or nearly completely magnetically disconnected from one another and act to carry flux in an axial direction. The costly and time-consuming process of establishing the radial stacked tooth punchings 25 within such a rotor can readily be envisioned.

FR—A—1,107,737 discloses a radial field electric motor which has a rotor core comprised of a wound strip of magnetic material. Slots are formed into one face of the rotor core but do not extend completely through the axial length of the core. An uncut portion of the core is left to help preserve the core integrity. A conductive spider is then positioned in the slots and around the slotted portions of the rotor core.

While the strip-like materials considered in EP—A—0 047 816, as aforesaid, may take the form of such conventional materials as silicon, iron or the like, the application additionally envisions the use of amorphous metallic alloys such as those available from Allied Corporation under its Metglas trademark due to the manner in which the same markedly reduce hysteresis and eddy current losses as a result of the high electrical resistivity characteristics and the low coercivity manifested thereby. These materials are preferred since, in essence, when amorphous magnetic alloys of this type are employed in the axial field electromagnetic devices described in the aforementioned U.S. patent application, resulting core losses exhibited tend to be approximately one-seventh of those present when conventional materials are utilized. However, such amorphous magnetic alloys are typically available only in the form of strips, tape or ribbon which are relatively thin and hence configuring the same into appropriate core configurations is generally a time-consuming costly process and this is especially true when flow-through rotor apparatus is considered.

Accordingly, the technical problem addressed by the invention is that of providing methods for manufacturing rotor structures having optimized efficiency from strips of magnetic material.

Therefore, it is an object of this invention to provide an improved rotor and a method of manufacturing flow-through rotor structures from strips or ribbons of magnetic material.

Various other objects and advantages of the present invention will become clear from the following detailed description of an exemplary embodiment thereof, and the novel features will be particularly pointed out in connection with the claims appended hereto.

Summary of the invention

Particular aspects of the present invention include a flow-through rotor defined by claim 8 and a method for making the same from magnetic material in strip form defined by claim 1. A strip of magnetic material may thus be wound upon a hub to form a cylindrical structure having first and second circular faces having a desired diameter and a width between faces corresponding to the width of the magnetic material in strip form; a plurality of equally spaced radial slots are cut into one of the circular faces to a selected depth corresponding to a portion of the width between faces; a spider formed of conductive material and having one spoke for each slot cut is then placed into the circular face having a plurality of equally spaced radial slots cut therein; the cylindrical structure is then reversed and a plurality of equally spaced radial slots are cut into the remaining one of the circular faces at locations corresponding to the locations at which slots were cut into said one of said circular faces to a depth corresponding to the remaining uncut width between faces; and a spider formed of conductive material and having one spoke for each slot cut is placed into said remaining circular face to complete the formation of a flow-through rotor formed of magnetic material in strip form.

When compared to conventional axial field rotor structures and conventional methods of manufacture, the present invention advantageously produces an axial field rotor having improved efficiency without incorporating extraneous supporting members to maintain the integrity of the rotor core.

Brief description of the drawings

The invention will be more clearly understood by reference to the following detailed description of an exemplary embodiment thereof in conjunction with the accompanyinag drawings in which:

Figure 1 shows an initial cylindrical structure formed in accordance with an exemplary embodiment of the present invention by winding magnetic material in strip form upon a hub so that the same may be further configured into rotor apparatus;

Figure 2 illustrates the manner in which a plurality of equally spaced radial slots are cut to a desired depth into one face of the rotor structure being formed;

Figure 3 shows the manner in which a spider formed of conductive material may be positioned for insertion in the slotted face of the cylindrical structure;

Figure 4 depicts the spider illustrated in Figure 3 inserted into the slotted portion of the cylindrical rotor apparatus being formed;

Figure 5 illustrates the cylindrical rotor structure shown in Figure 4 in an inverted position preparatory to operating upon a second face therof;

Figure 6 shows the manner in which a plurality of equally spaced radial slots are cut through from the second face of the rotor apparatus being formed;

Figure 7 illustrates the manner in which a spider may be positioned for insertion in the slotted remaining face of the rotor structure being formed; and

Figure 8 depicts the completed rotor structure.

Detailed description of the invention

Referring now to the drawings and more particularly to Figure 1 thereof, there is shown a cylindrical structure initially formed in accordance with an exemplary embodiment of the present invention by winding magnetic material 2 in strip form upon a hub 4. The magnetic material in strip form may take any of the conventional forms of materials such as silicon, iron or the various forms of amorphous magnetic alloy described in EP—P—A—0 047 816, as aforesaid, which is hereby specifically incorporated by reference herein. The width W of the strip of magnetic material would vary depending upon the thickness of the flow-through rotor structure to be configured, as well as the available range of widths which may be conveniently fabricated for the magnetic strip material selected and may typically be of an order of approximately one-inch. Similarly, the thickness T of the magnetic strip material would also be a function of the material selected, however, the same would generally range from 1 to 5 mils in thickness for the materials being described.

The hub 4 may take any of the conventional forms of hub structure suitable for placement in a winding machine to have the magnetic strip, ribbon or tape material wound thereon and is configured, as shall be seen bleow, to have a central aperture therethrough to accept the central structure of the spider to be employed herein. It should be noted, however, that under these circumstances the central hub of the spider will be similarly apertured so that the same accepts the shaft of the motor in which the rotor being formed is to be mounted. Alternatively, the hub 4 could be configured to be mounted upon the motor shaft *per se* and under these circumstances would cooperate with the spokes of the spider, as shall be seen below, to form an integral central hub portion thereof. Thus, the hub 4 would typically be configured of copper, aluminum or the like which may be suitably machined into appropriate form. However, as the principal function of the hub is to merely have a roll of magnetic material disposed thereon, other materials are readily available therefor including magnetic or nonmagnetic materials, as well as various forms of plastic or graphite materials and the like.

For purposes of manufacturing convenience, it has been found useful to employ a 2-piece copper hub which is soldered and thereafter placed in a winding machine to have a strip of magnetic material disposd thereon. Thus, a hub 4, configured in the manner described, is placed in a winding machine so that magnetic material in the form of amorphous magnetic alloy or the like is wound thereon in the manner illustrated in Figure 1. The number of turns of magnetic material wound on the hub will govern the resulting thickness of the rotor after it is wound and, as well known to those of ordinary skill in the art, the diameter selected will be a function of the size and torque requirements of the motor being designed under conditions where the more powerful the motor selected, the larger the diameter employed.

Upon completion of the manufacturing step illustrated in Figure 1, a roll of amorphous metal alloy, Metglas, silicon, iron or any of the other material disclosed in EP—A—0 047 816 will be disposed on the hub 4 to present, as illustrated in Figure 1, an initial rotor structure whose diameter is a function of the thickness T of the magnetic strip material 2 employed and the number of turns wound and whose height between opposing circular faces corresponds to the width W of the magnetic strip or tape material employed. It will also be appreciated by those of ordinary skill in the art that the initial rotor structure formed in this manner is laminated in the manner dictated by each turn of the magnetic strip material wound so that the same may subsequently be configured, in a manner to be described below, to form a flow-through rotor configuration, i.e. one having no magnetic return path such as shown, for instance, in Figures 5D and 6B of EP—A—0 047 816.

Referring now to Figure 2, there is shown the manner in which a plurality of equally spaced radial slots are cut to a desired depth D into one face of the rotor structure being formed. More particularly, as shown in Figure 2, a plurality of radial slots 6 are cut into a first face 8 of the roll of magnetic material formed in the manner illustrated in Figure 1. The radial slots 6 are all uniform in width and uniformly distributed about the circumference of the roll of magnetic material formed. The slots, as will be readily appreciated by those of ordinary skill in the art, may be conveniently cut into the first face of the roll of magnetic material by placing the roll of magnetic material in a chuck of a milling machine that is indexed and using the same to cut diametrically across the first face 8 to form a first pair of slots. Thereafter, the machine is indexed and a second diametric cut across the first face is made to form a second pair of slots and the milling machine is again indexed and this is continued until a desired number of slots, typically ranging from 28 to 48 in number are formed in the first face 8 of the roll of magnetic material. The depth D of each slot formed conveniently corresponds to one-half the width W of the magnetic strip material employed since, a selection of this depth allows the rotor apparatus being formed to maintain maximum structural stability throughout the course of the various cutting or milling operations being performed and, of course, only a single set-up for the milling machine will be required for each of the cutting operations illustrated in Figures 2 and 6. However, as will be readily appreciated by those of ordinary skill in the art, the depth of the cut selected in association with the forming steps associated with Figures 2 and 6 may be any arbitrary fraction of the total width W of the magnetic strip material so long as the sum of the depths D of the cuts illustrated in Figures 2 and 6 corresponds to the full width W of the strip material so that the cutting of slots illustrated in Figures 2 and 6 ultimately results in cutting entirely through the medium.

In the description of the cutting of the slots in the roll of magnetic material illustrated in Figure 2, cuts across the entire diameter of the roll of magnetic material have been discussed and it will be appreciated by those of ordinary skill in the art as the disclosure of the instant invention proceeds, that a cutting through of the hub is of little consequence. However, should it be desired to employ a forming technique wherein the central hub 4 is not entirely cut through, the slots may be formed by again chucking the roll of magnetic material entirely about its periphery and employing a milling machine to make radial cuts on the first face of the roll of magnetic material which do not fully cut through the entire hub. Thus, while this approach may impart certain manufacturing advantages wherein it is desired not to cut entirely through the hub 4, the machining care involved will be somewhat more exacting.

Typically, the cutting of the slots in the first face 8 of the roll of magnetic material may be performed, regardless of the magnetic material employed, on a standard milling machine employing a cutting wheel which is lubricated by conventional oil lubricates in the same manner that metals are conventionally cut in such milling machines. However, an alternate procedure would be to employ an abrasive wheel which was run sufficiently slowly so that no lubrication was required. Furthermore, as will be readily appreciated by those of ordinary skill in the art, either a vertical or horizontal milling machine is appropriate for the task and the desired indexing from one slot to the next could be implemented through a conventionally indexed rotating table for such milling machines.

In addition, rather than employing actual cutting techniques, surface grinding techniques could be similarly employed to achieve the same purpose and to this result, a variety of conventional grinding machines may be employed. In the course of various cutting techniques employed, no problems associated with the fusing of the various laminations in the roll of magnetic material formed have been encountered in association with the cutting of the slots 6. Thus, at the conclusion of the rotor forming step illustrated in

Figure 2, a plurality of radially disposed slots 6 which are uniform in width and uniformly distributed about the circumference of the first face 8 of the roll of magnetic material may be assumed to have been cut halfway through the roll of magnetic material to a depth D.

Once the initial face 8 of the roll of magnetic material has been slotted in the manner illustrated in Figure 2, the partially formed rotor has shorted conductors in the form of a spider inserted into the slotted face 8 thereof in the manner illustrated in Figure 3. Thus, as shown in Figure 3, a spider 10 may be positioned for insertion into the slotted face of the cylindrical structure formed by the roll of magnetic material whose first face 8 has been slotted. The spider 10 may take the conventional form of an aluminum or copper spider or alternatively, low temperature alloys of conductive material may be employed. The spider 10 has an inner hub portion 12 which, in the embodiment of the invention being illustrated, is adapted to be inserted into the hub 4 upon which the magnetic strip material 2 has been wound. The central portion or aperture in the hub 12 is of an appropriate diameter and configuration to be mounted upon the shaft of the motor being formed and, while not illustrated in Figure 3, may have an appropriate key slot or the like cut therein to accommodate such shaft.

In addition, the spider 10 has one radial spoke 14 for each radial slot 6 cut into the first face 8 of the roll of magnetic material and each spoke 14 is of uniform width and positioned within the periphery of the spider 10 so that the same will be readily disposed within the radial slots 6 cut into the roll of magnetic material. The spider 10 has, in the conventional manner, a circumferential outer ring 17 interconnecting the outer portion of each spoke 14 and the same is disposed from the center of the spider 10 a radial distance to closely fit about the periphery of the roll of magnetic material so that when the same is inserted into the cut face 8 of the roll of magnetic material, a squirrel cage configuration is formed. It should also be noted that in cases where the central hub 4 is formed of the same material as the spider 10 the central hub 12 of the spider may be omitted provided the spokes 14 are extended to fit within the cutaway portions of the hub 4 and coact therewith for mounting on the motor shaft. For this purpose, soldering of the spokes to the hub 4 may be employed.

The spider 10 as illustrated in Figure 3 may take the form of a stack of stampings, each of which is approximately a sixteenth-of-an-inch in thickness or any other width which is conveniently manufactured through a stamping process so that the same may be individually placed into the slots 6 in the first face 8 in the roll of magnetic material until a sufficient number of them have been disposed therein, in the manner illustrated in Figure 4, to entirely fill the depth of the initial slots cut therein. Alternatively, a one-piece spider may be machined for placement into the cut faces of the roll of magnetic material, however, this approach includes somewhat greater manufacturing expense.

As an alternate to either of these approaches, the cut areas of the roll of magnetic material could be coated and a spider material deposited therein through a dip or deposition technique or alternatively, the same could be placed in a mold and an appropriate spider cast into the cut portions of the roll of magnetic material as well as about the periphery thereof and within the hub. Here, however, it should be noted, that the availability of the casting technique would be a function of the type of magnetic material 2 employed and hence if a Metglas compound were utilized as the magnetic material, steps would have to be taken to insure that the melting point of the conductive material employed for the spider was below the crystallization temperature of the magnetic material. Thus, in the case of metallic glasses, the crystallization temperature is approximately 600° and hence a low temperature alloy would have to be employed for the material of the spider should a casting technique be employed.

Regardless of the manner in which the spider 10 is formed, the same is inserted into the cut face 8 of the roll of magnetic material to the full depth of the cuts therein in the manner illustrated in Figure 4. Thus in Figure 4, the stamped spiders 10 illustrated in Figure 3 are shown as inserted into the cut face 8 of the roll of magnetic material to form one-half of the rotor. The use of stamped spiders illustrated is viewed as highly advantageous as the same can be easily manufactured and thereafter merely placed into the cut face 8 of the roll of magnetic material in succession until the cut face is filled to the cut surface 8. At this juncture, it will also be appreciated by those of ordinary skill in the art that the structural integrity and hence rigidity of the roll of magnetic material is restored by the insertion of the conductive spiders 10 despite the cutting techniques imposed thereon in association with the step illustrated in Figure 2.

Once the spider material has been placed into the cut face of the rotor in the manner illustrated in Figure 4, a continuation of the formation of the rotor for the remaining face of the magnetic material may occur as the structural rigidity associated with the initial face of the roll of magnetic material operated upon has been restored. Further in this regard, it should be noted that if spider stampings which are very thin are employed in the manner illustrated, once the arrangement shown in Figure 4 is achieved, such stampings and the cut face of the rotor which is exposed may be shellacked or treated with an appropriate adhesive or epoxy material to maintain the same in place. Thereafter, the entire rotor arrangement is inverted in the manner illustrated in Figure 5 whereupon the second face of the roll of magnetic material may be configured.

Once the roll of magnetic material is inverted in the manner illustrated in Figure 5, the same may then again be chucked all around and placed in a milling machine so that radial slots 16 may be again cut into the second face 18 of the roll of magnetic material in the manner illustrated in Figure 6. This is implemented in the same manner described in connection with Figure 2, it being noted that the slots 16 cut in association with the processing step illustrated in Figure 6 must be arranged so that the same are aligned with those cut during the milling operation described in connection with Figure 2. In addition, the depth D' of the slots cut in association with the processing step illustrated in Figure 6 is such that the slots 16 will connect with the slots 6 cut during the method step illustrated in Figure 2. Thus the sum of the slot depths D + D' here must correspond to the width W of the strip of magnetic material, and as a result thereof, the slots 16 cut during the manufacturing step illustrated in Figure 6 connect to the spoke of the first inserted spider stamping 10.

Thereafter, in the manner illustrated in Figure 7, the second set of spider stampings 20 may be inserted into the second cut face 18 of the roll of magnetic material in precisely the same manner described in connection with figures 3 and 4. Furthermore, it should be appreciated that while the second spider 20 has been again illustrated as a stack of stampings, any of the variations thereof described in association with Figure 3 may be employed. However, thin stampings for the second spider 20 are again viewed as the most advantageous since the same may be inserted one at a time until the entire distance of the slot depths are filled to the second face 18 of the roll of magnetic material. In this manner, the laminated flow-through rotor configuration is formed as an axial-wound squirrel cage device in the manner illustrated in Figure 18. Furthermore, in precisely the same manner as described in connection with Figure 4, once the second set of spiders 20 has been inserted into the second cut face 18 of the roll of magnetic material as shown in Figure 8, the entire rotor formed may be treated with shellac, or an appropriate adhesive or epoxy to insure the mechanical stability thereof. This stability may be further enhanced, if desired, by the insertion of mechanical devices such as screws about the periphery of the rotor formed to insure the mechanical integrity thereof during high-speed rotation. Thus it will be seen that through the utilization of the highly convenient manufacturing techniques illustrated in Figures 1—8, an integral rotor configuration is achieved which is made up of very thin laminations of magnetic material originally fabricated in strip form. The result is a structure which is highly uniform in regard to the number of laminations per segment while being manufactured without undue expense or inconvenience. Absent these techniques, it will be appreciated that the physical placement of thin laminations of magnetic material within the spider employed to form a squirrel cage arrangement would be highly complex and expensive, as well as not being well-suited to the production of commercial devices. Thus, for instance, should prior art stacking techniques be attempted by way of application to the production of flow-through rotors formed of Metglas or the like, it will be appreciated that thousands of tiny pieces of magnetic material would have to be stacked within a spider and would result in a manufacturing approach which, if successful, would be exceedingly expensive as well as highly unreliable.

**Claims**

1. A method of forming rotors from magnetic material in strip form (2) comprising the steps of:

winding a strip of magnetic material about a hub (4) to form a cylindrical structure having first and second circular faces and a height between said first and second faces corresponding to the width of said strip of magnetic material;

forming a first plurality of uniform radially disposed slots (6) cut to a depth less than said width of said strip of magnetic material in one of said first and second circular faces, said first plurality of uniform radially disposed slots being uniformly distributed about the circumference of said one of said first and second circular faces;

inserting first spider means (10) into said first plurality of uniform radially disposed slots cut into said one of said first and second circular faces, said spider means being formed of conductive material and taking the form of an outer circular member (17) having a plurality of inwardly directed radial spokes (14) depending therefrom, said outer circular member having a diameter sized to fit over said cylindrical structure and each of said inwardly directed radial spokes being sized to fit within corresponding ones of said first plurality of radially disposed slots formed in said one of said first and second circular faces;

forming a second plurality of uniform radially disposed slots (16) cut to a depth corresponding to the remaining uncut width of said strip of magnetic material in another of said first and second circular faces, said second plurality of uniform radially disposed slots (16) being uniformly distributed about the circumference of said another of said first and second circular faces and indexed to coincide in location with said first plurality of uniform radially disposed slots (6) cut in said one of said first and second circular faces; and

inserting second spider means (20) into said second plurality of uniform radially disposed slots (16) cut into said another of said first and second circular faces, said second spider means (20) corresponding to said first spider means (10) and each of said first and second spider means extending from said depth of said first and second slots cut, respectively, to a respective one of said first and second circular faces.

2. The method of forming rotors according to Claim 1 wherein said first and second spider means (10, 20) take the form of thin metal stampings and said steps of inserting are performed by placing a plurality of said thin metal stampings into said first and second plurality of slots (6, 16) until said thin metal stampings extend from the bottom of the plurality of radial slots cut to the first and second circular face in which said plurality of radial slots were formed.

3. The method of forming rotors according to Claim 1 wherein said strip of magnetic material takes the form of an amorphous magnetic alloy.

4. The method of forming rotors according to Claim 1 wherein said first and second spider means (10, 20) additionally include an inner hub (12) and said inwardly directd radial spokes extending between said outer circular member and said inner hub.

5. The method of forming rotors according to Claim 4 wherein said inner hub (12) of said first and second spider means is configured to fit within said hub (4) upon which said strip of magnetic material is wound and is adapted to be mounted upon a shaft.

6. The method of forming rotors according to Claim 1 wherein said steps of forming first and second pluralities of uniform radially disposed slots comprise the steps of placing said cylindrical structure on a rotatable index table, cutting diametrically across a selected one of said first and second circular faces to form a first pair of radially disposed slots (6, 16) and indexing said rotatable index table to a desired location for a next pair of slots to be cut in a selected one of said first and second circular faces.

7. The method of forming rotors according to Claim 6 where said steps of cutting diametrically across a selected one of said first and second circular faces to form a first pair of radially disposed slots (6, 16) is performed by cutting diametrically across a selected one of said first and second circular faces to a depth corresponding to one-half said width of said strip of magnetic material.

8. Rotor comprising:

a roll of magnetic material forming a cylindrical structure, said roll of magnetic material taking the form of a thin strip (2) of magnetic material having a predetermined width wound upon a hub (4), said cylindrical structure having first and second circular faces and a distance between said first and second circular faces corresponding to said predetermined width;

a plurality of uniform radially disposed slots (6, 16) cut into said first and second circular faces and into said hub (4) extending entirely through said cylindrical structure between said first and second circular faces; and

spider means (10) having an inner hub (12), an outer circular member (17) and a plurality of radial spokes (14) extending therebetween disposed in said cylindrical structure and thereabout, said spider means being formed of conductive material and having one radial spoke for each of said plurality of uniform radially disposed slots cut into said first and second faces, said outer circular member (17) having a diameter sized to fit over said cylindrical structure and said plurality of radial spokes (14) being sized to fit within correspondng ones of said plurality of uniform radially disposed slots (6, 16) formed in said circular faces.

9. The rotor according to Claim 8 wherein said spider means (10) takes the form of a plurality of thin metal stampings.

10. The rotor according to Claim 8 wherein said strip (2) of magnetic material takes the form of an amorphous magnetic alloy.

## Patentansprüche

1. Verfahren zur Formgebung von Rotoren aus magnetischem Material in Streifenform (2) mit den folgenden Verfahrensschritten:

Aufwickeln eines Streifens von magnetischem Material auf eine Nabe (4) um einen zylindrischen Aufbau zu bilden, welcher eine erste und eine zweite kreisförmige Fläche hat und eine Höhe zwischen den kreisformigen Flächen, welche der Breite des Streifens von magnetischem Material entspricht;

Ausbilden einer ersten Vielzahl von gleichmäßig radial angeordneten Schlitzen (6), welche bis zu einer Tiefe, die weniger als die Breite des Streifens von magnetischem Material beträgt, in eine der erwähnten Kreisflächen geschnitten sind, wobei die erste Vielzahl von gleichmäßig radial angeordneten Schlitzen um den Umfang der erwähnten Kreisfläche gleichmäßig verteilt ist;

Einsetzen einer ersten Armsterneinrichtung (10) in die erste Vielzahl von gleichmäßig radial angeordneten Schlitzen, welche in eine der erwähnten Kreisflächen geschnitten sind, wobei die Armsterneinrichtung aus leitfähigem Material gebildet ist und die Form eines äußeren kreisförmigen Teiles (17) hat, welches eine Vielzahl von daran hängenden nach innen gerichteten, radialen Speichen (14) hat, wobei dieses äußere kreisförmige Teil einen Durchmesser von einer Größe hat, daß es über den erwähnten zylindrischen Aufbau paßt, und jede der nach innen gerichteten radialen Speichen in einer Größe ausgeführt ist, um in den entsprechenden Schlitz der ersten Vielzahl von radial angeordneten Schlitzen zu passen, welche in einer der beiden kreisförmigen Flächen ausgeformt sind; Ausformen einer zweiten Vielzahl von gleichmäßig radial angeordneten Schlitzen (16), welche bis zu einer Tiefe geschnitten sind, die der verbleibenden nicht geschnittenen Breite des erwähnten Streifens von magnetischem Material in die andere der beiden kreisförmigen Flächen entspricht, wobei die zweite Vielzahl von gleichmäßig radial angeordneten Schlitzen (16) um den Umfang dieser Kreisfläche gleichmäßig verteilt und eingedreht ist, daß sie räumlich mit der ersten Vielzahl von gleichmäßig radial angeordneten Schlitzen (6) zusammenfällt, welche in die erste der beiden kreisförmigen Flächen geschnitten ist; und

Einsetzen einer zweiten Armsterneinrichtung (20) in die zweite Vielzahl von gleichmäßig radial angeordneten Schlitzen (16), welche in die zweite der beiden kreisförmigen Flächen geschnitten sind, wobei die zweite Armsterneinrichtung (20) der erwähnten ersten Armsterneinrichtung (10) entspricht und jede der beiden Armsterneinrichtungen sich von der jeweiligen Tiefe der ersten bzw. zweiten Schlitze bis zu der jeweiligen Kreisfläche erstreckt.

2. Verfahren zur Formgebung von Rotoren nach Anspruch 1, wobei die erste und die zweite Armsterneinrichtung (10, 20) die Form von dünnen Metall-Preßstücken haben und wobei das erwähnte Einsetzen bewerkstelligt wird, indem eine Vielzahl der erwähnten dünnen Metall-Preßstücke in der erwähnten ersten und zweiten Vielzahl von Schlitzen (6, 16) angeordnet wird, bis die dünnen Metal-Preßstücke sich vom Boden der Vielzahl von radialen, geschnittenen Schlitzen bis zu der ersten und zweiten kreisförmigen Fläche erstrecken, in welchen die erwähnte Vielzahl von radialen Schlitzen ausgeformt wurden.

3. Verfahren zur Formgebung von Rotoren nach Anspruch 1, wobei der Streifen von magnetischem Material in Form einer amorphen magnetischen Legierung vorliegt.

4. Verfahren zur Formgebung von Rotoren nach Anspruch 1, wobei die erste und die zweite Armsterneinrichtung (10, 20) zusätzliche eine innere Nabe (12) enthalten und die einwärts gerichteten radialen Speichen sich zwischen dem äußeren kreisförmigen Teil und der inneren Nabe erstrekken.

5. Verfahren zur Formgebung von Rotoren nach Anspruch 4, wobei die innere Nabe (12) der ersten und der zweiten Armsterneinrichtung so ausgestaltet ist, daß sie in die Nabe (4), auf welche der Streifen von magnetischem Material aufgewickelt ist, hineinpaßt und zur Montage auf eine Welle angepaßt ist.

6. Verfahren zur Formgebung von Rotoren nach Anspruch 1, wobei die erwähnten Schritte des Ausformens von einer ersten und einer zweiten Vielzahl von gleichmäßig radial angeordneten Schlitzen Schritte aufweist, wonach der zylindrische Aufbau auf einem drehbaren Teiltisch angeordnet wird, eine ausgerählte der beiden kreisförmigen Flächen diametral durchschnitten wird, um ein erstes Paar von radial angeordneten Schlitzen (6, 16) zu bilden, und Eindrehen des rotierbaren Teiltisches in eine gewünschte Stellung um ein nächstes Paar von Schlitzen in die ausgewählte kreisförmige Fläche zu schneiden.

7. Verfahren zur Formgebung von Rotoren nach Anspruch 6, wobei die erwähnten Schritte des diametralen Durchschneidens einer ausgewählten der kreisförmigen Flächen um ein erstes Paar von radial angeordneten Schlitzen (6, 16) zu bilden, ausgeführt wird durch diametrales Durchschneiden der ausgewählten kreisförmigen Fläche bis zu einer Tiefe, die der Hälfte der Breite des Streifens von magnetischem Material entspricht.

8. Rotor mit:
einer Rolle von magnetischem Material, welche einen zylindrischen Aufbau bildet, und die Form eines dünnen Streifens (2) von magnetischem Material einer vorbestimmten Breite, welches, auf eine Nabe (4) aufgewickelt, ist, annimmt, wobei der zylindrische Aufbau eine erste und zweite kreisförmige Fläche und einen Abstand zwischen der ersten und zweiten kreisförmigen Fläche entsprechend der erwähnten vorbestimmten Breite hat;

einer Vielzahl von gleichmäßig radial angeordneten Schlitzen (6, 16), welche in die erste und zweite kreisförmige Fläche und in die erwähnte Nabe (4) geschnitten sind, welche sich vollständig durch den erwähnten zylindrischen Aufbau zwischen der ersten und zweiten kreisförmigen Fläche erstreckt; und

Armsterneinrichtungen (10) mit einer inneren Nabe (12), einem äußeren kreisförmigen Teil (17) und einer Vielzahl von sich dazwischen erstreckenden radialen Speichen (14), welche in dem erwähnten zylindrischen Aufbau und um diesen herum angeordnet sind, wobei die Armsterneinrichtungen aus leitfähigen Material gebildet sind und für jeden der Vielzahl von gleichmäßig radial angeordneten Schlitzen, welche in die beiden kreisförmigen Flächen geschnitten sind, eine radiale Speiche haben, das äußere kreisförmige Teil (17) einen Durchmesser in der Größe hat, daß es über den zylindrischen Aufbau paßt und wobei die Vielzahl von radialen Speichen (14) von einer Größe ist, daß sie in die jeweils entsprechenden der Vielzahl von gleichmäßig radial angeordneten Schlitzen (6, 16) paßt, welche in den erwähnten kreisförmigen Flächen ausgebildet sind.

9. Rotor nach Anspruch 8, wobei die erwähnte Armsterneinrichtung (10) die Form einer Vielzahl von dünnen Metall-Preßstücken annimmt.

10. Rotor nach Anspruch 8, wobei der Streifen (2) von magnetischem Metall in Formm einer amorphen magnetischen Legierung vorliegt.

**Revendications**

1. Procédé d'obtention de rotors à partir d'une matière magnétique sous la forme de bande (2) comprenant les étapes consistant:

à enrouler une bande de matière magnétique autour d'un moyeu (4) pour former une structure cylindrique ayant une première et une deuxième faces circulaires et une hauteur entre ladite première et ladite seconde faces correspondant à la largeur de ladite bande de matière magnétique;

à former une première pluralité de fentes uniformes (6) disposées radialement découpées à une profondeur inférieure à celle de la largeur de ladite bande de matière magnétique dans l'une desdites première et deuxième faces circulaires, ladite première pluralité de fentes uniformes disposées radialement étant répartie uniformément autour de la périphérie de l'une desdites première et deuxième faces circulaires;

à insérer un premier croisillon (10) dans ladite première pluralité de fentes uniformes disposées radialement dédoupées dans l'une desdites première et seconde faces circulaires, ledit croisillon étant formé de matière conductrice et affectant la forme d'un élément circulaire externe (17) ayant une pluralité de rayons radiaux (14) dirigés vers l'intérieur, ledit élément circulaire extérieur ayant un diamètre dimensionné pour s'adapter à ladite structure cylindrique et chacun desdits rayons radiaux dirigés vers l'intérieur étant dimensionné pour s'adapter dans les fentes correspondantes de la première pluralité de fentes disposées radialement formées dans l'une desdites premières et deuxièmes faces circulaires;

à former une deuxième pluralité de fentes uniformes (16) disposées radialement découpées à une profondeur correspondant à la largeur non découpée restante de ladite bande de matière magnétique dans une autre desdites première et deuxième faces circulaires, ladite deuxième pluralité de fentes uniformes (16) disposées radialement étant répartie uniformément autour de la périphérie de l'autre desdites première et deuxième faces circulaires et réglée pour coïncider avec ladite première pluralité de fentes (6) uniformes disposées radialement découpées dans l'une desdites première et deuxième faces circulaires et

à insérer un deuxième croisillon (20) dans ladite deuxième pluralité de fentes uniformes (16) disposées radialement découpées dans l'autre desdites première et deuxième faces circulaires, ledit deuxième croisillon (20) correspondant audit premier croisillon (10) et chacun dudit premier et dudit deuxième croisillon s'étendant à partir de ladite profondeur de ladite première et de ladite deuxième fentes découpées respectivement à partir de l'une respective desdites première et deuxième faces circulaires.

2. Procédé d'obtention de rotors selon la revendication 1, caractérisé en ce que le premier et le deuxième croisillons (10, 20) affectent la forme de pièces découpées minces en métal et l'opération d'insertion est réalisée en plaçant une pluralité desdites pièces découpées minces en métal dans lesdites première et deuxième pluralité de fentes (6, 16) jusqu'à ce que lesdites pièces découpées minces en métal s'étendent à partir dur fond de la pluralité de fentes radiales découpées dans la première et la deuxième faces circulaires où est formée ladite pluralité de fentes radiales.

3. Procédé d'obtention de rotors selon la revendication 1, caractérisé en ce que la bande de matière magnétique affecte la forme d'un alliage magnétique amorphe.

4. Procédé d'obtention de rotors selon la revendication 1. caractérisé en ce que le premier et le deuxième croisillons (10, 20) comportent, en outre, un moyeu intérieur (12) et lesdits rayons radiaux dirigés vers l'intérieur s'étendent entre ledit élément circulaire extérieur et ledit moyeu intérieur.

5. Procédé d'obtention de rotors selon la revendication 4, caractérisé en ce que ledit moyeu intérieur (12) dudit premier et second croisillons est agencé pour s'adapter dans ledit moyeu (4) sur lequel la bande de matière magnétique est enroulée et agencée pour être montée sur un axe.

6. Procédé d'obtention de rotors selon la revendication 1, caractérisé en ce que les opérations de formation des premières et secondes pluralités de fentes uniformes disposées radialement consistent à placer ladite structure cylindrique sur une table d'indexage rotative, à découper diamétralement au niveau de l'une choisie desdites première et seconde faces circulaires pour former une première paire de fentes (6, 16) disposées radialement et à indexer ladite table d'indexage rotative jusqu'à un emplacement désiré pour une nouvelle paire de fentes à découper dans l'une choisie desdites première et seconde faces circulaires.

7. Procédé d'obtention de rotors selon la revendication 6, caractérisé en ce que l'étape de découpage d'une desdites première et seconde faces circulaires choisies, diamétralement pour former une première paire de fentes (6, 16) disposées radialement est réalisée en découpant diamétralement au niveau de l'une choisie desdites première et seconde faces circulaires jusqu'à une profondeur correspondant à la moitié de la largeur de ladite bande de matière magnétique.

8. Rotor comprenant:

un rouleau de matière magnétique formant une structure cylindrique, ledit rouleau de matière magnétique affectant la forme d'une bande mince (2) de matière magnétique ayant une largeur prédéterminée enroulée sur un moyeu (4), ladite structure cylindrique ayant une première et une deuxième faces circulaires et une distance entre ladite première et ladite secondes faces circulaires correspondant à ladite largeur prédéterminée.

une pluralité de fentes uniformes (6, 16) disposées radialement découpées dans ladite première et deuxième faces circulaires et dans ledit moyeu (4) s' étendant entièrement à travers ladite structure cylindrique entre ladite première et seconde faces circulairies et

un croisillon ayant un moyeu intérieur (12), un élément circulaire extérieur (17) et une pluralité de rayons radiaux (14) s'étendant entre eux et disposés dans ladite structure cylindrique, ledit croisillon étant formé de matière conductrice et ayant un rayon radial pour chacune de ladite pluralité de fentes uniformes disposées radialement pratiquées dans ladite première et ladite seconde faces, ledit élément circulaire extérieur (17) ayant un diamètre dimensionné pour s'adapter à ladite structure cylindrique et ladite pluralité de rayons radiaux (14) étant dimensionnée pour s'adapter à celle correspondante de ladite pluralité de fentes uniformes (6, 16) disposées radialement formées dans lesdites faces circulaires.

9. Rotor selon la revendication 8, caractérisé en ce que le croisillon (10) affecte la forme d'une pluralité de pièces découpées minces en métal.

10. Rotor selon la revendication 8, caractérisé en t ce que la bande (2) matière magnétique affecte la forme d'un alliage magnétique amorphe.

FIG. 1

FIG. 5

FIG. 2

FIG. 6

FIG. 3

FIG. 7

FIG. 4

FIG. 8

1